# EUROPEAN PATENT APPLICATION

(11) **EP 4 507 070 A1**
(43) Date of publication of application: **12.02.2025**
(21) Application number: 24188483.2
(22) Date of filing: 12.07.2024
(51) Int. Cl.: H01M 10/617, H01M 10/659, H01M 50/10, H01M 50/147

(54) **THERMAL MANAGEMENT ASSEMBLY FOR AN ENERGY STORAGE CELL AND ENERGY STORAGE CELL EQUIPPED THEREWITH**

(30) Priority: 07.08.2023 DE 102023120965
(71) Applicant: Skeleton Technologies GmbH, 01900 Grossröhrsdorf (DE)
(72) Inventor: GÜNTHER, Max, 01900 Großröhrsdorf (DE)
(74) Representative: KASTEL Patentanwälte PartG mbB

(57) **Abstract**

A cell body or lid member for an energy storage cell, the cell body or lid member comprising a thermal management structure that is configured to store and release heat, wherein the thermal management structure has at least one first type portion and at least one second type portion, and the first type portion has a greater heat capacity than the second type portion.

## Description

The invention relates to a cell body for an energy storage cell, the cell body having a thermal management structure. The invention further relates to a thermal management assembly and an energy storage cell.

Energy storage cells of all kinds, and particularly supercapacitors, generate heat during the charging and discharging processes. These processes are typically managed by a management system. As the charging and discharging takes place, it may happen that a small amount of non-aqueous electrolyte goes into the vapor phase, since the boiling points of typically used electrolytes are rather low, e.g., < 50°C.

Sometimes it is possible that the energy storage cells can fail due to thermal runaway. In this condition some initial error causes the cell to heat up due to energy being released, which in turn increases the rate at which energy is released, which causes further heating.

In order to reduce the risk of thermal runaway or at least mitigate its effects, various systems have been developed, such as leak detection, controlled discharge systems, emergency cooling systems or thermal monitoring systems. Most of the systems are thus typically part of an energy storage module in which the energy storage cells are combined and not the cell itself.

It is the object of the invention to improve thermal management on the cell level.

The object is achieved by the subject-matter of the independent claims. Preferred embodiments are subject-matter of the dependent claims.

The invention provides a current tab assembly for an energy storage cell, the assembly comprising an energy storage assembly that comprises a positive electrode with an active material, a negative electrode with an active material, and a separator arranged between the electrodes, wherein the energy storage assembly has a peripheral contour; and a current tab plate that is arranged in electrical contact with one electrode of the energy storage assembly, and the current tab plate has a peripheral contour that corresponds to the peripheral contour of the energy storage assembly.

The invention provides an energy storage cell configured for storing electrical energy, the cell comprising a cell body having a top portion with a top opening; a lid member fastened to the top portion to close the top opening; and a preferred current tab assembly, wherein the energy storage assembly is accommodated within the cell body, and the current tab plate is arranged in electrical contact with and between the lid member and one of the electrodes of the energy storage assembly.

The energy storage assembly and the current tab plate can be pre-attached to each other or inserted separately into the cell body. The contour of the current tab plate improves the alignment with the energy storage assembly. Furthermore, the current tab can provide enough space for weld seams. The increased tolerance afforded by the current tab plate may better tolerate inconsistencies in the positioning of weld seams, which overall allows for more repeatable manufacturing within the given tolerance. As a result, the reliability of mass manufacturing can be increased.

The invention provides a lid assembly for an energy storage cell, the assembly comprising:
- a lid member having a lid circumferential portion, the lid circumferential portion extending in a circumferential direction and having a profile that includes a sealing support protrusion that extends in a radial direction;
- a sealing member extending in the circumferential direction, and having an annular shape and a profile that includes a first vertical sealing portion that is recessed in the radial direction,
wherein the sealing support protrusion and the first vertical sealing portion engage each other in a sealing manner to prevent the leakage of a fluid electrolyte.

The invention provides an energy storage cell configured for storing electrical energy, the cell comprising:
- a cell body having a top portion with a top opening;
- a preferred lid assembly, wherein the lid member is fastened to the top portion to close the top opening; and
- an energy storage assembly accommodated within the cell body and electrically connected to the lid member and the cell body.

During charging/discharging heat is generated within the energy storage cell. The heat can sometimes be enough to vaporize enough electrolyte, which can cause a pressure increase in the cell body. The lid and its sealing form a labyrinth type configuration that reliably blocks the electrolyte independent of its phase from exiting the cell body.

The invention provides a cell body for an energy storage cell, the cell body comprising:
- a top portion with a top opening;
- a bottom portion; and
- a cell body wall that extends between the top portion and the bottom portion,
wherein the bottom portion comprises a thermal management structure that is configured to store and release heat, wherein the thermal management structure has at least one first type portion and at least one second type portion, and the first type portion has a greater heat capacity than the second type portion.

The invention provides a lid member configured for being fastened to a top portion of a cell body of an energy storage cell, the lid member comprising a body portion that has formed thereon a thermal management structure, wherein the thermal management structure is configured to store and release heat, wherein the thermal management structure has at least one first type portion and at least one second type portion, and the first type portion has a greater heat capacity than the second type portion.

The invention provides a thermal management assembly comprising:
- a preferred cell body and/or a preferred lid member; and
- at least one current tab member, each current tab member having a terminal portion, and at least one electrical contact portion that is configured to conductively contact the energy storage assembly, when it is installed,
wherein the current tab member is arranged between the bottom portion and/or the lid member and the energy storage assembly, when it is installed.

The invention provides an energy storage cell configured for storing electrical energy, the cell comprising a preferred cell body or a preferred lid member and/or a preferred thermal management assembly.

This idea is based on an increase of thermal inertia. During normal operation, heat is generated when charging or discharging the cell. The heat is typically generated in the energy storage assembly and conducted towards the lid or the cell bottom, where it can be transported away by connecting bus bars or other elements external to the cell. Increasing the heat capacity locally in the cell serves as an intermediate reservoir that can remove the heat from the energy storage assembly more efficiently, thereby reducing a risk for thermal damage. In a case of thermal runaway, the thermal management structure is able to receive a substantial amount of heat that is transferred further using external measures, such as cooling and the bus bars. As a result, the typically exponential progress of the thermal runaway can be slowed down particularly at the beginning, thereby allowing valuable time for engaging countermeasures, such as emergency discharges.

Preferably, the current tab plate comprises a plate main body portion and a plate peripheral portion. Preferably, the plate peripheral portion has a greater thickness than the plate main body portion and/or protrudes vertically from the plate main body portion. The plate main body portion can make a two-dimensional contact with the energy storage assembly. The plate peripheral portion is located radially outward and can directly connect to a lid member and the energy storage assembly. The electrical resistivity can be reduced in the more radially outward region. This allows the radially outward region of the energy storage assembly, which typically stores more energy relative to radially inward lying regions, to be electrically connected with a lower resistivity thereby reducing ohmic heating.

Preferably, the current tab plate comprises at least one venting slit that extends from a centre of the current tab plate towards the plate peripheral portion or that extends parallel to the plate peripheral portion with a distance therebetween and/or a central opening that is formed in the centre of the current tab plate. The venting slit allows vaporized electrolyte to pass through the current tab plate. This allows reduction of the overall pressure within the cell body or convective heat transport towards the top or bottom end of the cell. Consequently, a better heat distribution or increased cooling can be achieved. The central opening allows the same and in addition eases filling of the cell body with electrolyte during manufacturing.

Preferably, the plate peripheral portion and/or an outer main body portion that is formed directly adjacent to the plate peripheral portion extend along the whole circumference of the current tab plate and is continuously formed without interruptions. The portions can form an annular contact surface that is able to collect current from around the whole outer circumference of the energy storage assembly.

Preferably, an inner main body portion that is formed directly adjacent to the venting slit and/or the central opening extends in the circumferential direction and is continuously formed without interruptions. The portion can form an annular contact surface that is able to collect current from around the whole inner circumference of the energy storage assembly.

Preferably, the current tab plate comprises a plate hub that is formed at the centre of the current tab plate, wherein the plate hub protrudes from the current tab plate, preferably from the plate main body portion, in a normal direction. With this configuration, the current tab plate can basically follow the shape of the cell body along its bottom. The contact area may be increased and thus electrical resistivity be reduced.

Preferably, the plate hub comprises a plate hub recess that extends in a normal direction. The recess allows the electrolyte a little extra volume to expand into.

Preferably, the energy storage cell further comprises a second current tab plate. Preferably, the cell body has a bottom portion disposed opposite the top portion, and the second current tab plate is arranged in electrical contact with the bottom portion and the other one of the electrodes of the energy storage assembly. It is possible to arrange the current tab plate at the top with the lid member or at the bottom with the closed bottom portion of the cell body.

Preferably, the lid member and/or the bottom portion have an inner circumferential contact surface that is arranged in electrical contact with the inner main body portion. Preferably, the lid member and/or the bottom portion have an outer circumferential contact surface that is arranged in electrical contact with the outer main body portion and/or the plate peripheral portion. The circumferential contact surfaces can press down onto the current tab member and form a reliable electrical contact with it. The contact surface may be welded to the current tab member.

Preferably, the lid member and/or the bottom portion comprises an expansion recess that defines an expansion chamber between the current tab plate and the lid member and/or the bottom portion. The recess forms an additional volume for vaporized electrolyte. The pressure within the cell can therefore be reduced. Furthermore, it is possible for the electrolyte to condense on the cooler parts and flow back. Consequently, an additional convective cooling can take place.

Preferably, the lid member comprises a central hub portion, and the central hub portion includes at least one fluid passage. While the central hub portion typically can block fluid communication, the fluid passage allows for vapourised electrolyte to flow from the centre radially outward and vice versa.

Preferably, the lid member comprises a central filling opening, and the central filling opening is closed with a compliant first plug that is inserted into the opening to press against its inner circumference, and the compliant plug is in fluid communication with the cell interior of the cell body. The compliant first plug ensures an electrolyte tight seal. Furthermore, the material can be chosen to withstand electrolyte vapours. Also, the material can be chosen to avoid contamination of the electrolyte. This plug allows centre filling of the cell body in a controlled environment and subsequent closure, since no welding is necessary.

Preferably, lid member comprises a second plug made from a material that is weldable to the lid member, and the second plug prevents a fluid communication of the first plug with the outside of the cell body. The second plug can reliably close-off the cell interior from the environment.

Preferably, the profile of the lid circumferential portion includes a vertical sealing surface that extends from the sealing support protrusion downward in an axial direction. Preferably, the profile of the sealing member includes a second vertical sealing portion that extends from the first vertical sealing portion downward in the axial direction and seals against the vertical sealing surface. In addition to a reliable labyrinth-type configuration, the vertical sealing can prevent electrolyte vapours from even reaching this stage. Furthermore, the vertical seal can electrically insulate the lid member from the cell.

Preferably, the profile of the lid circumferential portion includes a horizontal sealing surface that extends from the sealing support protrusion inward in the radial direction. Preferably, the profile of the sealing member includes a horizontal sealing portion that extends from the first vertical sealing portion inward in the radial direction and seals against the horizontal sealing surface. The horizontal seal can effectively prevent matter from reaching into the cell. It is also possible to electrically insulate the lid member from the crimping.

Preferably, the lid member comprises a plate-like lid body portion that is disposed adjacent to the lid circumferential portion. Preferably, the lid body portion has a lid circumferential sealing surface that extends in the axial direction. Preferably, the profile of the sealing member includes a third vertical sealing portion that extends from the horizontal sealing portion upward in the axial direction and seals against the lid circumferential sealing surface. This seal gives a possible support for a bus bar and can prevent foreign matter from entering the area where the bus bar is typically connected.

Preferably, the lid assembly further comprises a current tab plate that is in direct electrical contact with the lid member. The current tab plate collects current with lower resistivity as the lid member could by itself.

Preferably, the current tab plate comprises a plate main body portion and a plate peripheral portion, wherein the plate peripheral portion has a greater thickness than the plate main body portion or protrudes vertically from the plate main body portion. Preferably, the plate peripheral portion is in direct electrical contact with the lid circumferential portion. The thickness or protruding of the plate peripheral portion can decrease electrical resistivity by having more conductive material or an increased surface contact to the lid member.

Preferably, the lid assembly further comprises a top portion of a cell body of an energy storage cell, the top portion including a top formed portion that presses the sealing member against the lid member to form a seal. The sealing member is pressed against the lid member to fix the lid member in place and effectively close-off the cell body.

Preferably, the top formed portion includes a top caulked portion that presses the vertical sealing portion against the vertical sealing surface to form a seal. The bead can radially press the lid member in position, thereby locating it close to the centre. This arrangement is repeatable with small tolerances such that a cell to cell variation in production can be reduced. In connection with other features of the lid, this can also ensure a reliable electrical contact between the lid member and the current tab plate.

Preferably, the top formed portion includes a top crimped portion that presses the horizontal sealing portion against the horizontal sealing surface to form a seal. The crimped portion can secure the lid member at the top.

Preferably, the first type portion is formed to be in thermal contact with an energy storage assembly, when the energy storage assembly is installed. Preferably, the second type portion has no direct contact with the energy storage assembly, when the energy storage assembly is installed. The first type portion can initially receive the heat and redistribute it towards the second type portion. As the second type portion is not in contact with the heat generating element, a cooling effect can be achieved.

Preferably, the thermal management structure, preferably the first type portion, comprises a thermal contact surface that is formed to be in thermal contact with an energy storage assembly, when the energy storage assembly is installed. The energy storage assembly, specifically the transition from the electrodes to the current tabs and in turn to the cell body or lid member, are the typical locations at which heat is generated. The direct contact of the first type portion can therefore transport the heat away from the places where it typically is generated.

Preferably, the first type portion has a greater material thickness than the second type portion. This is one way of increasing the heat capacity.

Preferably, the thermal management structure comprises a thermal contact member that is formed to protrude from the bottom portion towards the top portion and/or that is formed to protrude from the body portion. Preferably, the thermal contact member includes a contact wall and at least one side wall that form the first type portion. The thermal contact members typically have a contact wall that directly contacts the heat generation location and one or more side walls that help receiving the heat. The side walls are typically integrally formed with the contact wall. The side walls are preferably formed such that they are not in contact with a heat source and can therefore transport the heat away from the contact wall.

Preferably, the thermal management structure comprises an accommodation groove that has an accommodation groove bottom, and the accommodation groove bottom and the energy storage assembly, when it is installed, define an accommodation space therebetween. The space can receive a longitudinally shaped member that can help transporting heat from a centre radially outward.

Preferably, the accommodation groove, preferably the accommodation groove bottom, forms the second portion. The groove is spaced apart from the heat source to better distribute the heat.

Preferably, the thermal contact member, preferably the contact wall, has the thermal contact surface disposed thereon. The thermal contact surface can be made to improve thermal contact either by according surface machining, coating or other means.

Preferably, the current tab member is configured as a legged current tab member, and preferably integrally formed as a single unitary member. The legged current tab member can be made to fit the accommodation grooves.

Preferably, the current tab member includes a plurality of contact legs that protrude from the terminal portion in a radial direction. The terminal portion is typically in the centre and from there contact legs can protrude in a star-like pattern. The member is typically configured such that it matches the accommodation grooves.

Preferably, the terminal portion is formed as a heat sink portion that tapers from the electrical contact portion towards the terminal portion. In addition to a simple electrical connection, the terminal portion can have also additional heat capacity, e.g., by increasing the amount of material or material thickness, that acts as a heat sink.

Preferably, the electrical contact portion includes a thermal conductive leg portion that protrudes from the heat sink portion along the electrical contacting portion. The heat conduction can be further increase by having additional leg portions of greater heat conductivity, e.g., by increasing thickness, that allow effective transport of heat from the terminal portion radially outward along the legs.

Embodiments of the invention are described in more detail with reference to the accompanying schematic drawings that are listed below. While this invention is described with more detail with reference to a cylindrically shaped cell, it should be noted that the invention may be applied to other typical shapes.
Fig. 1 depicts a longitudinal cross-section through an energy storage cell;
Fig. 2 depicts an upper portion of the energy storage cell of Fig. 1;
Fig. 3 and
Fig. 4 depict a perspective view of a lid member;
Fig. 5 depicts a perspective view of a current tab plate;
Fig. 6 depicts a lower portion of the energy storage cell of Fig. 1;
Fig. 7 depicts a variant of the lower portion of Fig. 6;
Fig. 8 and
Fig. 9 depicts a perspective view of a legged current tab member;
Fig. 10 depicts a longitudinal cross-section through an energy storage cell;
Fig. 11 depicts a perspective view of a lower portion of Fig. 10;
Fig. 12 to
Fig. 14 depict a longitudinal cross-section through the lower portion of Fig. 11;
Fig. 15 depicts a lateral cross-section through the lower portion of Fig. 11;
Fig. 16 depicts a variant of the lower portion of Fig. 11;
Fig. 17 depicts a perspective view of a lid member of the energy storage cell of Fig. 10; and
Fig. 18 depicts a perspective view from the bottom of the lid member of Fig. 17.

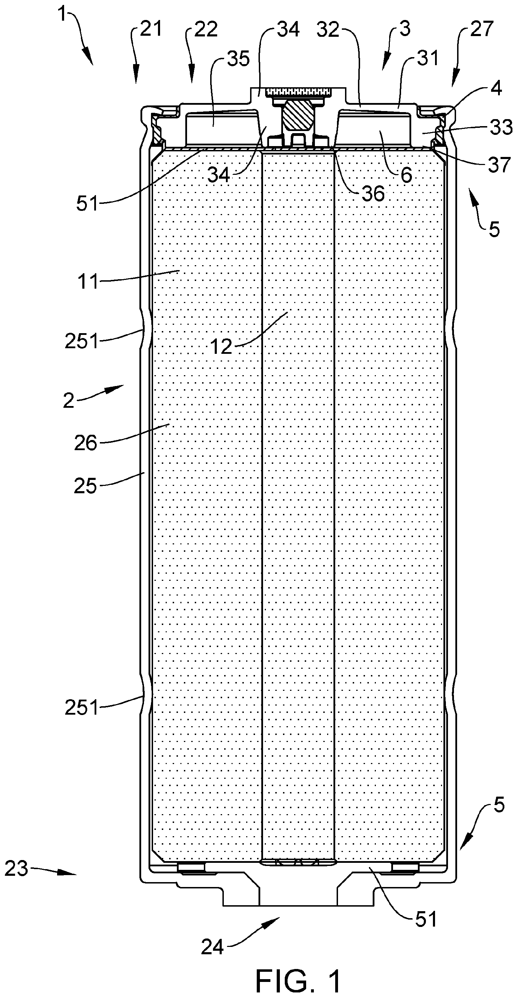

Referring to Fig. 1, an energy storage cell 1 is depicted in a longitudinal cross-section. The energy storage cell 1 is configured for storing electrical energy. The energy storage cell 1 is preferably configured as a supercapacitor.

The energy storage cell 1 comprises an energy storage assembly 11. The energy storage assembly 11 is configured for storing electrical energy. The energy storage assembly 11 comprises a positive electrode and a negative electrode. Each electrode includes an active material. The electrodes and active materials are separated from each other by a separator. The electrodes are generally made form a metallic substrate, such as aluminium foil. The active material is disposed on the aluminium foil. The active material is preferably a microporous carbon material that can have various additives, which are known and not described here. The energy storage assembly 11 is typically manufactured by winding the stack of positive electrode with active material, separator, and negative electrode with active material into a cylindrical element. This element is sometimes called jelly-roll. The energy storage assembly 11 is wetted with a non-aqueous electrolyte, preferably through an inner channel 12. The inner channel 12 extends from one end to the other of the energy storage assembly 12.

The energy storage cell 1 comprises a cell body 2. The cell body 2 is preferably formed in a roughly cylindrical shape, although other shapes are possible. The cell body 2 can be formed by impact forming, deep drawing or other forming techniques from a sheet of metal or a small metal rod.

The cell body 2 is formed with a top portion 21. The top portion 21 has a top opening 22. The top opening 22 allows access into the cell body 2. The top opening 22 can be closed-off by a lid. The top portion 21 typically extends from the height of the upper end of the energy storage assembly 11 upward along an axial direction of the cell body 2.

The cell body 2 is formed with a bottom portion 23 that is opposite the top portion 21. The bottom portion 23 can be completely closed or mainly closed with a bottom opening 24. The bottom opening 24 is preferably located such that the inner channel 12 and the bottom opening 24 are aligned along the axial direction. The bottom portion 23 extends from the height of the lower end of the energy storage assembly 11 downward along the axial direction.

The cell body 2 is formed with a cell body wall 25. The cell body wall 25 extends between the top portion 21 and the bottom portion 23 along the axial direction. The cell body wall 25 may include a plurality of beaded portions 251. The beaded portions 251 can help to increase stability of the cell body 2 or can be used to position and support the energy storage assembly 11.

The cell body 2 has a cell interior 26 that can be separated from the outside of the cell body 2. The cell interior 26 is preferably defined by the closed top portion 21 and/or closed bottom portion 23 and/or the cell body wall 25.

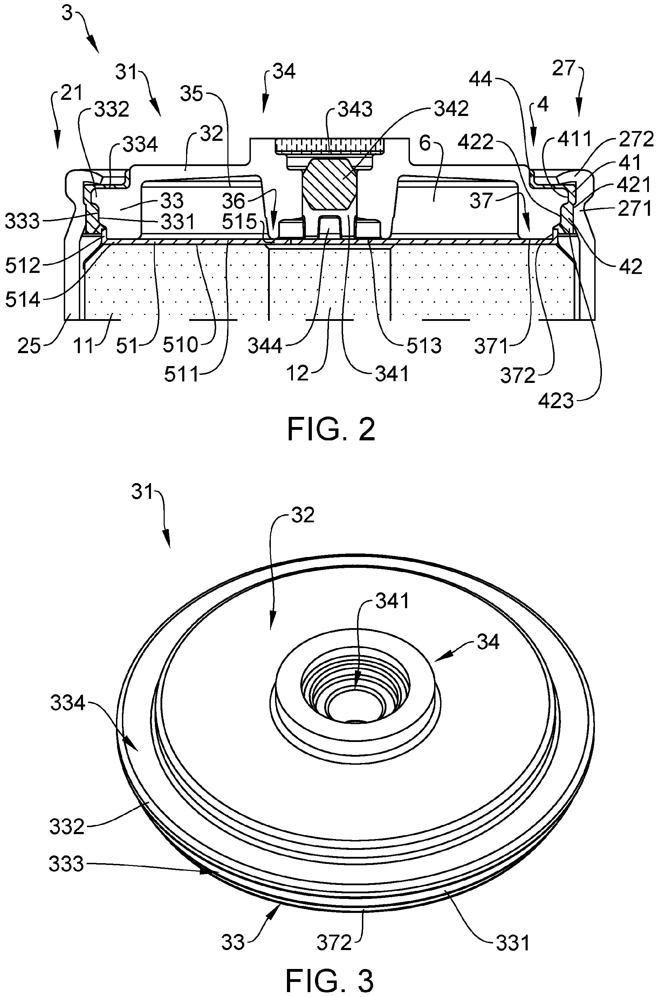

Referring to Fig. 2, a lid assembly 3 is shown that closes-off the top portion 21.

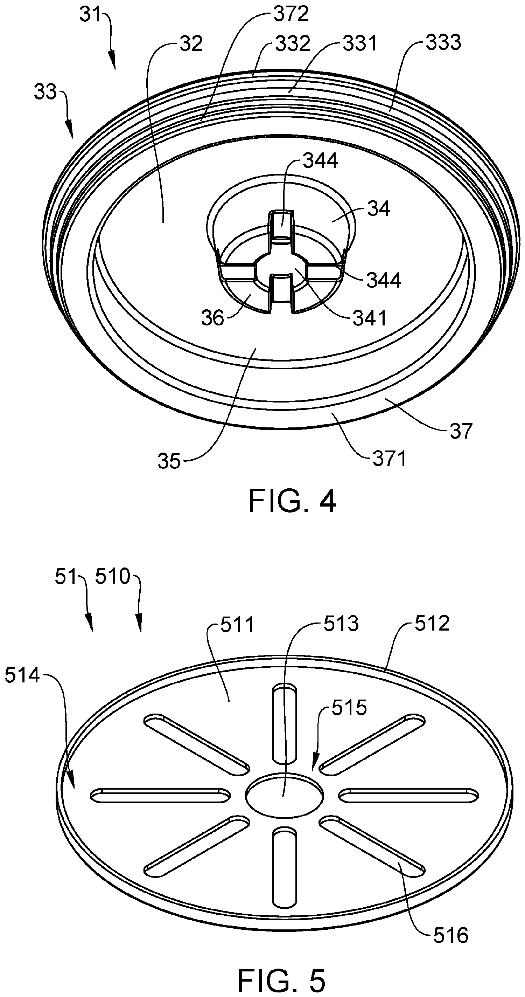

The lid assembly 3 comprises a lid member 31 that is also illustrated in Fig. 3 and Fig. 4. The lid member 31 is formed to match the top opening 22 and the cell body 2 and suitable to close the top opening 22. The lid member 31 is generally disk-shaped.

The lid member 31 comprises a lid body portion 32. The lid body portion 32 is generally a thin disk-like portion from which other elements may protrude.

The lid member 31 comprises a lid circumferential portion 33. The lid circumferential portion 33 protrudes from the lid body portion 32 at its outer rim portion downward in an axial direction. The lid circumferential portion 33 extends along a circumferential direction of the lid body portion 32. The lid circumferential portion 33 is preferably annular in shape. The lid circumferential portion 33 preferably has a material thickness greater than that of the lid body portion 32 in the axial and/or radial directions.

The lid circumferential portion 33 comprises a lid circumferential sealing surface 331. The lid circumferential sealing surface 331 extends in a circumferential direction. The lid circumferential sealing surface 331 faces the cell body 2.

The lid circumferential portion 33 comprises a sealing support protrusion 332. The sealing support protrusion 332 protrudes from the lid circumferential portion 33 radially outward. The sealing support protrusion 332 preferably extends along the entire circumference of the lid member 31.

The lid circumferential portion 33 comprises a vertical sealing surface 333. The vertical sealing surface 333 extends from the sealing support protrusion 332 axially downward. The vertical sealing surface 333 faces the cell body 2.

The lid circumferential portion 33 comprises a horizontal sealing surface 334. The horizontal sealing surface 334 extends from the sealing support protrusion 332 radially inward.

The lid member 31 comprises a central hub portion 34. The central hub portion 34 protrudes from the lid body portion 32 in the axial direction. The central hub portion 34 can serve as a terminal for connecting a bus bar to the energy storage cell 1. The central hub portion 34 may also extend into the cell interior and protrude towards the energy storage assembly 11.

The central hub portion 34 comprises a central filling opening 341. The central filling opening 341 is suitable for inserting electrolyte into the cell interior 26 through the central filling opening 341.

The central hub portion 34 comprises a first plug 342. The first plug 342 is made to be compliant so it can be pressed into the central filling opening 341. The first plug 342 can be made of an elastomer, for example. The first plug 342 is held in place by a press-fit. The first plug 342 has a roughly cylindrical shape and may have tapered sections to easily insert the first plug 342 into the central filling opening 341. The first plug 342 is exposed to the cell interior 26 and fluidly connected therewith.

The central hub portion 34 comprises a second plug 343. The second plug 343 is made to be weldable to the lid member 31. The second plug 343 can be made of a metal, e.g., aluminium. The second plug 343 completely covers and closes the top opening 22. The second plug 343 is roughly disk-shaped with an annular rim. The second plug 343 is welded to the lid member 31 preferably via the annular rim.

The lid member 31 comprises an expansion recess 35. The expansion recess 35 may be formed as an asymmetric groove. The expansion recess 35 is preferably walled by the lid body portion 32, which may form the groove bottom, the lid circumferential portion 33, which may form the radial outer wall, and the central hub portion 34, which may form the radial inner wall.

The central hub portion 34 comprises a plurality of fluid passages 344. Each fluid passage 344 fluidly connects the expansion recess 35 with the central filling opening 341. The expansion recess 35 and a current tab member 51 may form an expansion chamber 6 into which vapourised electrolyte can expand.

The lid member 31 comprises an inner circumferential contact surface 36. The inner circumferential contact surface 36 has a roughly annular shape. The inner circumferential contact surface 36 faces the cell interior 26. The inner circumferential contact surface 36 is in direct contact with a current tab assembly 5 to collect current. The inner circumferential contact surface 36 is disposed on the central hub portion 34.

The lid member 31 comprises an outer circumferential contact surface 37. The outer circumferential contact surface 37 faces the cell interior 26 and the cell body wall 25. The outer circumferential contact surface 37 is formed on the lid circumferential portion 33, preferably adjacent to the lid circumferential sealing surface 331.

The outer circumferential contact surface 37 includes an outer horizontal contact surface 371 that is disposed on the lower surface of the lid circumferential portion 33. The outer horizontal contact surface 371 faces the cell interior 26 towards the bottom portion 23. The outer horizontal contact surface 371 is in direct contact with the current tab assembly 5.

The outer circumferential contact surface 37 includes an outer vertical contact surface 372 that is disposed on the circumferential surface of the lid circumferential portion 33. The outer vertical contact surface 372 faces radially outward towards the cell body wall 25. The outer vertical contact surface 371 is in direct contact with the current tab assembly 5.

Referring back to Fig. 1 and 2, the energy storage cell 1 comprises a sealing member 4. The sealing member 4 is made from an electrically insulating material. The sealing member 4 is preferably made from an elastomer and shaped to match the lid assembly 3. Specifically, the sealing member 4 is configured to seal against the top portion 21 and the lid member 31. The sealing member 4 is preferably annular in shape.

The sealing member 4 comprises a first vertical sealing portion 41. The vertical sealing portion 41 is formed to be supported by the sealing support protrusion 332. The first vertical sealing portion 41 includes a sealing groove 411 that matches the sealing support protrusion 332. The first vertical sealing portion 41 is shaped to form a labyrinth-style sealing configuration.

The sealing member 4 comprises a second vertical sealing portion 42. The second vertical sealing portion 42 is formed adjacent to the first vertical sealing portion 41. The second vertical sealing portion 42 protrudes axially downward from the first vertical sealing portion 41.

The second vertical sealing portion 42 includes an outer vertical sealing portion 421 that faces radially outward and is preferably in contact with the top formed portion 27, specifically with the top caulked portion 271.

The second vertical sealing portion 42 includes an inner vertical sealing portion 422 that faces radial inward and is preferably in contact with the vertical sealing surface 333.

The second vertical sealing portion 42 includes a vertical end portion 423 that protrudes axially downward and avoids contact with the cell body 2, the lid member 31, and the current tab assembly 5.

The sealing member 4 comprises a horizontal sealing portion 43 that is formed adjacent to the first vertical sealing portion 41. The horizontal sealing portion 43 protrudes radially inward from the first vertical sealing portion 41. The horizontal sealing portion 43 is preferably in contact with the horizontal sealing surface 334.

The horizontal sealing portion 43 includes an upper horizontal sealing portion 431 that faces axially outward and is preferably in direct contact with the top portion 21, preferably the top crimped portion 272.

The horizontal sealing portion 43 includes a lower horizontal sealing portion 432 that faces axially downward and is preferably in direct contact with the lid member circumferential portion 33, preferably the horizontal sealing surface 334.

The sealing member 4 comprises a third vertical sealing portion 44. The third vertical sealing portion 44 is formed adjacent to the horizontal sealing portion 43. The third vertical sealing portion 44 protrudes axially upward from the horizontal sealing portion 43. The third vertical sealing portion 44 may seal against the central hub portion 34. The third vertical sealing portion 44 may serve as a support for a bus bar that is mounted to the central hub portion 34.

Referring to Fig. 2 and Fig. 5, a current tab assembly 5 is described in more detail. The current tab assembly 5 may include at least one current tab member 51. The current tab member 51 is configured for current collection and in electrical contact with the energy storage assembly 11.

The current tab member 51 can be configured as a current tab plate 510. The current tab plate 510 is an essentially plate-shaped member made from a thin conductive material, e.g., aluminium sheet metal. The current tab plate 510 is a generally disk shaped member.

The current tab plate 510 comprises a plate main body portion 511 the plate main body portion 511 is a portion of uniform thickness and essentially a disk.

The current tab plate 510 comprises a plate peripheral portion 512. The plate peripheral portion 512 can be formed thicker as the main body portion 511 or by bending the outer rim of the current tab plate 510 upward. The plate peripheral portion 512 has thus a greater thickness in the axial direction compared to the main body portion 511. The plate peripheral portion 512 extends around the entire circumference of the current tab plate 510. The plate peripheral portion 512 is formed at an outermost rim portion of the current tab plate 510.

The plate main body portion 511 may include a plate central opening 513 that is formed in its centre.

The plate main body portion 511 may include an outer main body portion 514. The outer main body portion 514 is formed adjacent to the plate peripheral portion 512. The outer main body portion 514 extends annularly along the circumferential direction and has a small width. The outer main body portion 514 runs along the circumferential direction without being interrupted.

The plate main body portion 511 may include an inner main body portion 515. The inner main body portion 515 is formed adjacent to the plate central opening 513. The inner main body portion 515 extends annularly along the circumferential direction and has a small width. The inner main body portion 515 runs along the circumferential direction without being interrupted.

The current tab plate 510 may include a plurality of venting slits 516. The venting slits 516 extend radially and may be formed between the inner and outer main body portions 514, 515.

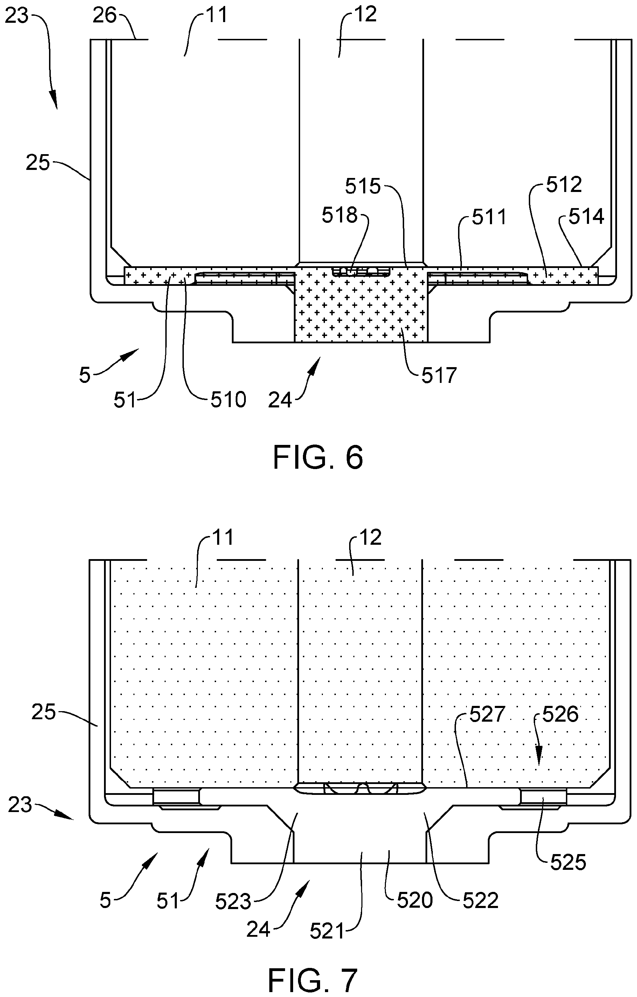

Referring to Fig. 6, the current tab plate 510 may include a plate hub 517 that protrudes from the plate main body portion 511 downward. The plate hub 517 is formed to fit the bottom opening 24. The plate hub 517 is welded to the bottom portion 23 via the bottom opening 24.

The current tab plate 518 may include a plate hub recess 518. The plate hub recess 518 is formed in the centre and faces the cell interior 26.

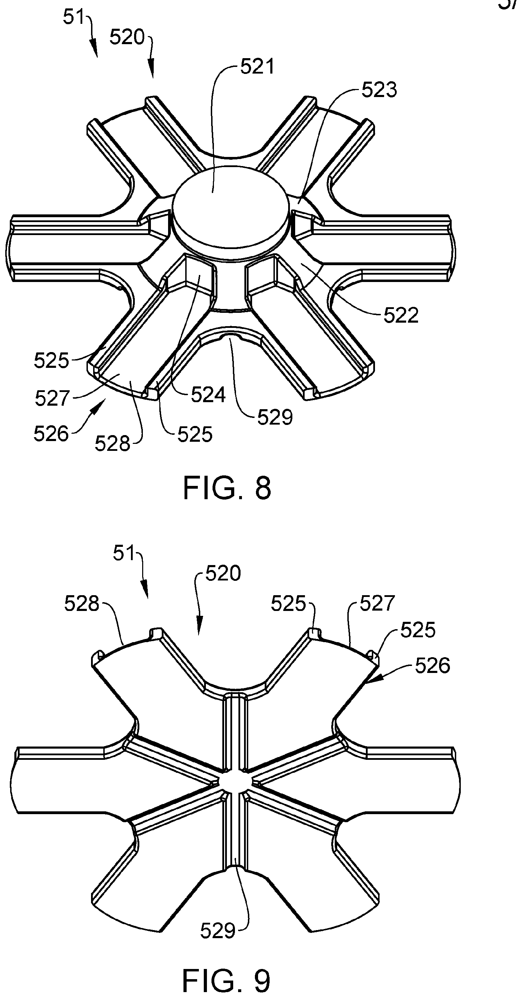

Referring to Fig. 7 to Fig. 9, the current tab member 51 may be configured as a legged current tab member 520. The legged current tab member 520 may include a terminal portion 521. The terminal portion 521 is formed in the centre and protrudes axially to allow insertion into an opening, such as the bottom opening 24. The legged current tab member 520 may include a heat sink portion 522 that is formed on the terminal portion 521. The heat sink portion 522 may be configured as a tapered heat sink portion 523 that tapers towards the terminal portion 521.

The legged current tab member 520 comprises a plurality of contact legs 526. Each contact leg 526 protrudes radially outward from the terminal portion 521. The contact legs 526 are preferably distributed along the circumferential direction to form a star-like pattern.

Each contact leg 526 includes a tab welding portion 527 that is welded to the energy storage assembly 11. The tab welding portion 527 is preferably formed as a tab welding groove 528.

The heat sink portion 522 may include a notch that extends along the radial direction and continuously transitions into the tab welding groove 528.

The legged current tab member 520 may include a plurality of thermal conductive leg portions 525 that extend on a rim portion of each contact leg 526. Each thermal conductive leg portion 525 has a greater thickness than the tab welding portion 527. The thermal conductive leg portions 525 may form the side walls of the tab welding groove 528.

The heat sink portion 522, preferably the tapered heat sink portion 523 are formed to continuously transition into the thermal conductive leg portions 525 along the radial direction.

The legged current tab member 520 may include a plurality of recessed grooves 529 that are formed on the opposite side of the terminal portion 521. The recessed grooves 529 extend radially and allow a fluid connection for electrolyte. The recessed grooves 529 may be formed in a star pattern and/or are preferably formed between two neighbouring contact legs 526.

Assembly of the energy storage cell 1 works as follows. The cell body 2 is provided without the top formed portion 27. The energy storage assembly 11 is welded on either end to a current tab member 51. The respective current tab member 51 is chosen to fit the respective lid member 31 and the bottom portion 24. The energy storage assembly 11 with the current tab members 51 is inserted into the cell interior 26. The beaded portions 251 help positioning the energy storage assembly 11. The sealing member 4 is put onto the lid member 31 and retained by the sealing support portion 332. The lid member 31 and the sealing member 4 are placed on the current tab member 51. The top portion 21 is caulked and crimped to fasten the lid member 31 to the cell body 2, wherein the sealing member 4 provides electrical insulation therebetween. The electrolyte is filled through the central filling opening 341, which is subsequently closed by inserting the first plug 342 with a press-fit and welding the second plug 343 in place.

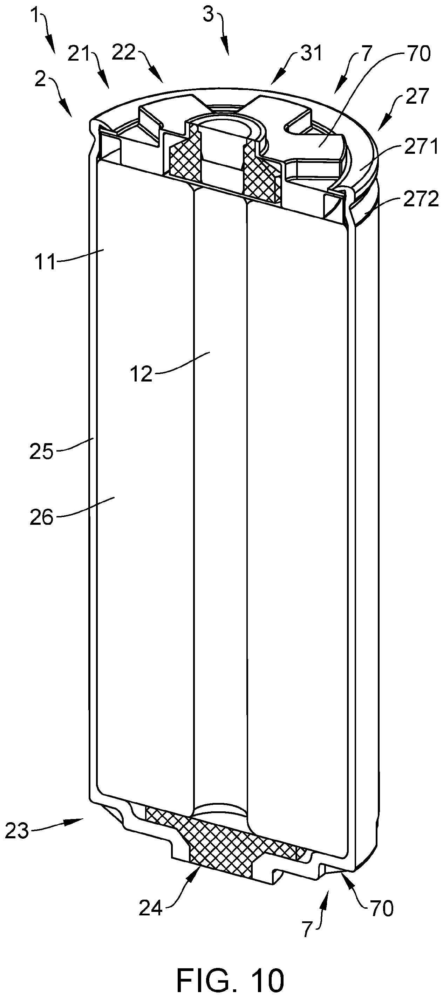

Referring to Fig. 10 to Fig. 17 another embodiment of an energy storage cell 1 is described insofar as it differs from the previously described embodiment.

Referring to Fig. 10, an energy storage cell 1 has a thermal management assembly 7 formed on each end of the energy storage cell 1.

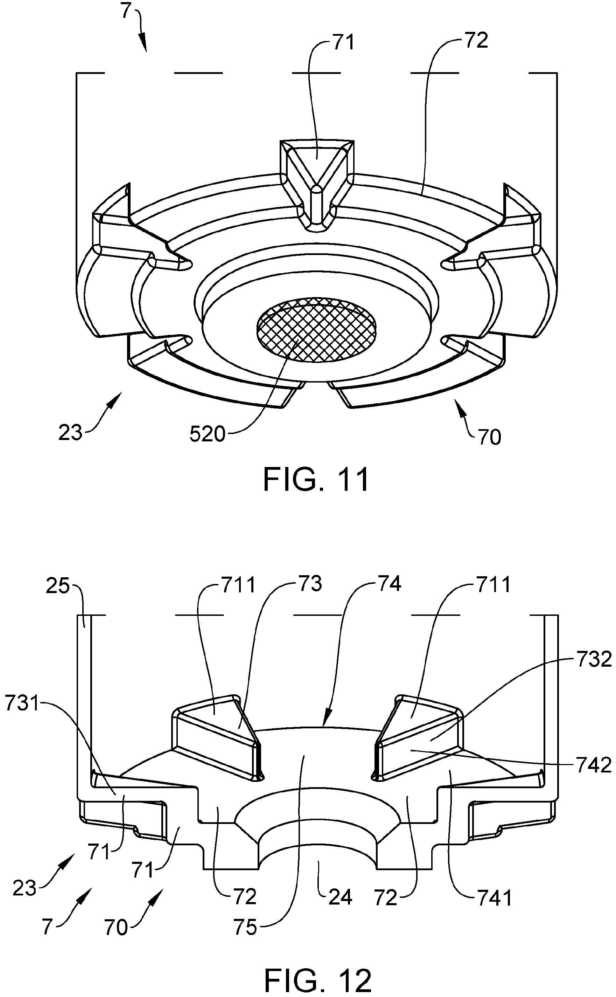

Referring to Fig. 11 to Fig. 15, the bottom portion 23 is described in more detail. The thermal management assembly 7 comprises a thermal management structure 70. The thermal management structure 70 is formed into the bottom portion 23. The thermal management structure 70 is configured to perform heat conducting and store heat.

The thermal management structure 70 includes a first type portion 71. The first type portion 71 is in direct contact with the energy storage assembly 11. The first type portion 71 may have a thermal contact surface 711 that is in direct contact with the energy storage assembly 11. The thermal contact surface 711 may be prepared for better heat conduction, for example, by appropriate coating or surface finish. The first type portion 71 is generally formed with a greater heat capacity than neighbouring portions. The first type portion 71 has a greater thickness along the axial direction compared to neighbouring portions, which allows for a greater heat capacity.

The thermal management structure 70 includes a second type portion 72. The second type portion 72 avoids direct contact with the energy storage assembly 11. The second type portion 72 is spaced apart from the energy storage assembly 11 along the axial direction. The second type portion 72 is generally formed with a smaller heat capacity compared to the first type portion 71. The second type portion 72 has a smaller thickness along the axial direction compared to the first type portion 71.

The thermal management structure 70 may include a plurality of thermal contact members 73. The thermal contact member 73 may be formed into the bottom portion 23. The thermal contact member 73 protrudes from the bottom portion 23 upward and is in direct contact with the energy storage assembly 11.

The thermal contact member 73 includes a contact wall 731 that is in direct contact with the energy storage assembly 11. The contact wall 731 extends horizontally. The contact wall 731 has a trigonal contour. The contact wall 731 extends radially inward from the cell body wall 25. The contact wall 731 forms a first type portion 71.

The thermal contact member 73 includes a side wall 732 that is adjacent to the contact wall 731. The side wall 732 extends vertically. The side wall 732 has a quadrilateral contour. The side wall 732 extends axially downward from the contact wall 731. The side wall 732 together with the contact wall 731 forms a first type portion 71.

Two neighbouring thermal contact members 73 can define an accommodation groove 74 between them. The accommodation groove 74 extends radially. The accommodation groove 74 is configured to accommodate a legged current tab member 520, specifically the contact legs 526.

The accommodation groove 74 includes an accommodation groove bottom 741. The accommodation groove bottom 741 avoids direct contact with the energy storage assembly. The accommodation groove bottom 741 extends horizontally. The accommodation groove bottom 741 has a trapezoidal contour. The accommodation groove bottom 741 tapers inward from the cell body wall. The accommodation groove bottom 741 forms the second type portion 72.

The accommodation groove 74 includes an accommodation groove side wall 742. The accommodation groove side wall 742 is formed by the thermal contact members 73, specifically the side walls 732.

The thermal management structure 70 comprises an accommodation space 75 for the legged current tab member 520, and the accommodation space 75 is defined between the accommodation groove 74 and the energy storage assembly 11.

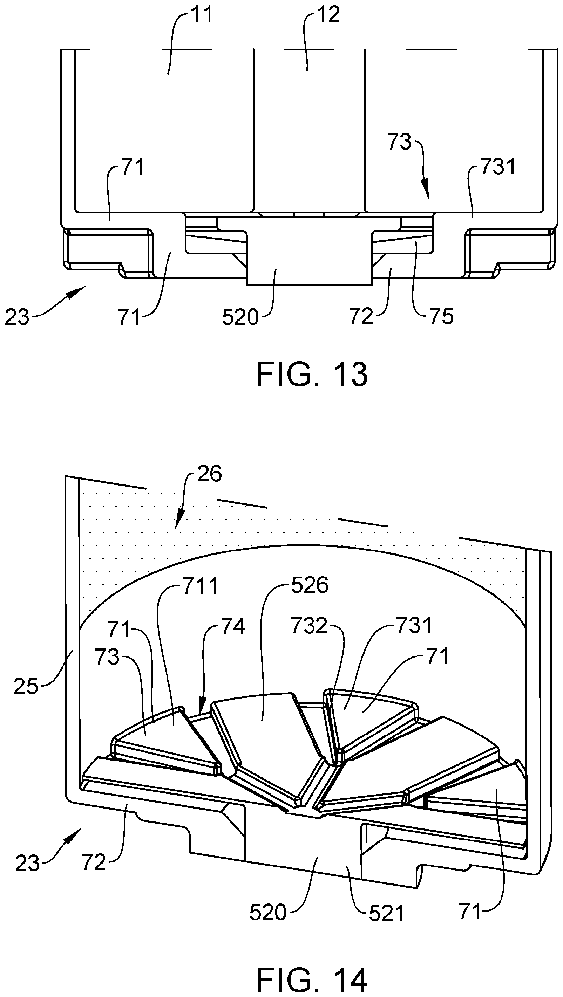

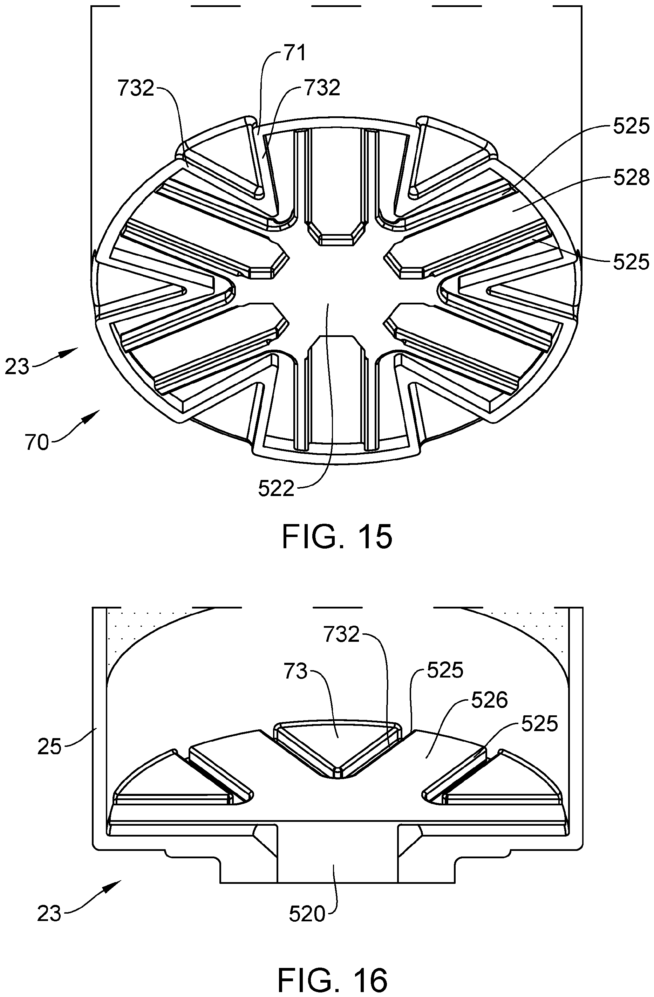

Referring to Fig. 14 and Fig. 15, the legged current tab member 520 is inserted such that the contact legs 526 extend radially into the accommodating space 75. The space between either side of the contact legs 526 and the adjacent accommodation groove side wall 742 tapers radially inward, thereby forming a gap that is narrower closer to the centre than more radially outward.

As depicted in Fig. 15, the heat sink portion 522 may also be in thermal contact with the first type portion 72, specifically the side wall 732.

Referring to Fig. 16, the legged current tab member 520 and the thermal management structure 70, e.g., the thermal contact members 73 are formed such that the gap between them is of constant width in the radial direction.

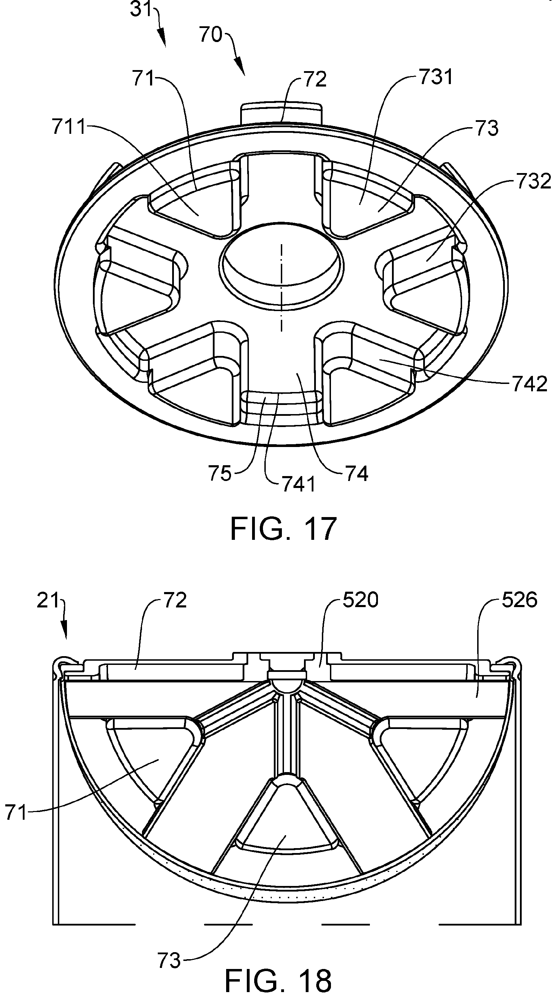

Referring to Fig. 17 and Fig. 18, the thermal management assembly 7 comprises the lid member 31. The lid member 31 has formed therein the thermal management structure 70 that is basically of the same configuration as the previously described one.

During operation, heat is generated by the energy storage assembly 11. The heat is conducted towards the top and bottom portions 21, 23 via the current tab members 51. The thermal management structure 70, specifically the first type portion 71 has a large heat capacity and can act as a heat sink and store the heat. Alone or in conjunction with the legged current tab member 520 a substantial thermal inertia can be formed that is able to significantly reduce the thermal load on the energy storage assembly 11, thereby increasing its lifetime. In case of a thermal runaway, the additional thermal inertia can reduce the risk of damage to other energy storage cells.

### List of reference signs:

- 1: energy storage cell
- 11: energy storage assembly
- 12: inner channel

- 2: cell body
- 21: top portion
- 22: top opening
- 23: bottom portion
- 24: bottom opening
- 25: cell body wall
- 251: beaded portion
- 26: cell interior
- 27: top formed portion
- 271: top caulked portion
- 272: top crimped portion

- 3: lid assembly
- 31: lid member
- 32: lid body portion
- 33: lid circumferential portion
- 331: lid circumferential sealing surface
- 332: sealing support protrusion
- 333: vertical sealing surface
- 334: horizontal sealing surface
- 34: central hub portion
- 341: central filling opening
- 342: first plug
- 343: second plug
- 344: fluid passage
- 35: expansion recess
- 36: inner circumferential contact surface

- 37: outer circumferential contact surface
- 371: outer horizontal contact surface
- 372: outer vertical contact surface

- 4: sealing member
- 41: first vertical sealing portion
- 411: sealing groove
- 42: second vertical sealing portion
- 421: outer vertical sealing portion
- 422: inner vertical sealing portion
- 423: vertical end portion
- 43: horizontal sealing portion
- 431: upper horizontal sealing portion
- 432: lower horizontal sealing portion
- 44: third vertical sealing portion

- 5: current tab assembly
- 51: current tab member
- 510: current tab plate
- 511: plate main body portion
- 512: plate peripheral portion
- 513: plate central opening
- 514: outer main body portion
- 515: inner main body portion
- 516: venting slit
- 517: plate hub
- 518: plate hub recess
- 520: legged current tab member
- 521: terminal portion
- 522: heat sink portion
- 523: tapered heat sink portion
- 524: notch
- 525: thermal conductive leg portion

- 526: contact leg
- 527: tab welding portion
- 528: tab welding groove
- 529: recessed groove

- 6: expansion chamber

- 7: thermal management assembly
- 70: thermal management structure
- 71: first type portion
- 711: thermal contact surface
- 72: second type portion
- 73: thermal contact member
- 731: contact wall
- 732: side wall
- 74: accommodation groove
- 741: accommodation groove bottom
- 742: accommodation groove side wall
- 75: accommodation space

## Claims

1. A cell body for an energy storage cell, the cell body comprising:
- a top portion with a top opening;
- a bottom portion; and
- a cell body wall that extends between the top portion and the bottom portion,
wherein the bottom portion comprises a thermal management structure that is configured to store and release heat, wherein the thermal management structure has at least one first type portion and at least one second type portion, and the first type portion has a greater heat capacity than the second type portion.

2. A lid member configured for being fastened to a top portion of a cell body of an energy storage cell, the lid member comprising a body portion that has formed thereon a thermal management structure, wherein the thermal management structure is configured to store and release heat, wherein the thermal management structure has at least one first type portion and at least one second type portion, and the first type portion has a greater heat capacity than the second type portion.

3. The cell body or lid member according to any of the preceding claims, wherein the first type portion is formed to be in thermal contact with an energy storage assembly, when the energy storage assembly is installed; and/or wherein the second type portion has no direct contact with the energy storage assembly, when the energy storage assembly is installed.

4. The cell body or lid member according to any of the preceding claims, wherein the thermal management structure, preferably the first type portion, comprises a thermal contact surface that is formed to be in thermal contact with an energy storage assembly, when the energy storage assembly is installed.

5. The cell body or lid member according to any of the preceding claims, wherein the first type portion has a greater material thickness than the second type portion.

6. The cell body or lid member according to any of the preceding claims, wherein the thermal management structure comprises a thermal contact member that is formed to protrude from the bottom portion towards the top portion and/or that is formed to protrude from the body portion.

7. The cell body or lid member according to claim 6, wherein the thermal contact member includes a contact wall and at least one side wall that form the first type portion.

8. The cell body or lid member according to any of the preceding claims, wherein the thermal management structure comprises an accommodation groove that has an accommodation groove bottom, and the accommodation groove bottom and the energy storage assembly, when it is installed, define an accommodation space therebetween.

9. The cell body or lid member according to claim 8, wherein the accommodation groove, preferably the accommodation groove bottom, forms the second portion.

10. The cell body or lid member according to any of the claims 6 to 9, wherein the thermal contact member, preferably the contact wall, has the thermal contact surface disposed thereon.

11. The cell body or lid member according to any of the preceding claims, wherein the thermal management stthe current tab member is configured as a legged current tab member, and preferably integrally formed as a single unitary member.

12. A thermal management assembly comprising:
- a cell body and/or a lid member according to any of the preceding claims; and
- at least one current tab member, each current tab member having a terminal portion, and at least one electrical contact portion that is configured to conductively contact the energy storage assembly, when it is installed,
wherein the current tab member is arranged between the bottom portion and/or the lid member and the energy storage assembly, when it is installed.

13. The thermal management assembly according to claim 12, wherein the current tab member includes a plurality of contact legs that protrude from the terminal portion in a radial direction.

14. The thermal management assembly according to claim 12 or 13, wherein the terminal portion is formed as a heat sink portion that tapers from the electrical contact portion towards the terminal portion.

15. An energy storage cell configured for storing electrical energy, the cell comprising a cell body or a lid member according to any of the claims 1 to 11 and/or a thermal management assembly according to any of the claims 12 to 14.
